# EUROPEAN PATENT SPECIFICATION

(11) **EP 1 112 873 B1**
(45) Date of publication and mention of the grant of the patent: **06.06.2007**
(21) Application number: 00127661.7
(22) Date of filing: 18.12.2000
(51) Int. Cl.: B60H 1/32

(54) **A system for airconditioning the passenger compartment of a vehicle**
Vorrichtung zur Klimatisierung des Innenraums von Kraftfahrzeugen
Dispositif de climatisation de l'habitacle d'un véhicule

(30) Priority: 21.12.1999 IT TO991120
(43) Date of publication of application: 04.07.2001
(73) Proprietor: FIAT AUTO S.p.A., 10135 Torino (IT)
(72) Inventor: Mingrino, Fabio, 10128 Torino (IT)
(74) Representative: Quinterno, Giuseppe

(56) References cited:
- DE-A- 3 635 353
- US-A- 4 616 484
- US-A- 5 598 718
- PATENT ABSTRACTS OF JAPAN vol. 012, no. 424 (M-761), 10 November 1988 (1988-11-10) & JP 63 159123 A (TOYO RADIATOR KK), 2 July 1988 (1988-07-02)

## Description

The present invention relates to a system for cooling and heating a passenger compartment of a motor vehicle.

More specifically, the subject of the invention is a system which can operate as a cooling system in a first operating condition and as a heating system with a heat pump in a second operating condition.

Document DE 36 35 353, which is considered as the closest prior art, discloses such a system, which can operate as a cooling system in a first operating condition and as a heating system with a heat pump in a second operating condition. In heat pump mode, a further heat exchanger is connected to the liquid engine-coolant circuit of the motor vehicle to act as an evaporator.

Document US 4 616 484 discloses another example of such a system, which can operate as a cooling system in a first operating condition and as a heating system with a heat pump in a second operating condition. In heat pump mode, a further heat exchanger (chiller) is connected to the liquid engine-coolant circuit of the motor vehicle to act as an evaporator. The heating capacity is controlled by one device capable of varying the flow of coolant to the heat exchanger inlet as a function of coolant temperature.

It is an object of the invention to further improve the system, in particular when operated as a cooling system in a first operating condition.

The system according to the invention comprises:
a closed circuit in which a working fluid is subjected to a thermodynamic cycle and which includes a compressor with a delivery opening connected to a condenser, followed by fluid expansion means and then by a heat exchanger which can act as an evaporator and as a condenser and the output of which is connected to the suction intake of the compressor,
a by-pass duct having one end connected between the compressor and the condenser and the other end connected between the expansion means and the input of the said heat exchanger,
electrically-operated switching valve means which can adopt a first and a second operative condition in which the by-pass duct is excluded from and connected in the circuit, respectively, so that, in the said first condition, the system operates as a cooling system and the said heat exchanger acts as an evaporator and, in the second condition, the system operates as a heating system with a heat pump and the said exchanger acts as a condenser,

a further heat exchanger of the gas/liquid type, which is interposed between the said heat exchanger and the suction intake of the compressor, and which can act, in the first and second operating conditions of the switching valve means, respectively, as an accumulator for the working fluid in the liquid state, and as an evaporator,
the said further heat exchanger being connected to the liquid engine-coolant circuit of the motor vehicle by means of a variable-flow solenoid valve,
control means, being associated with the solenoid valve, able to modify the flow in the solenoid valve when the said switching valve means are in the said first operative condition so as to bring about controlled superheating of the working fluid which enters the compressor, in dependence on its detected temperature.

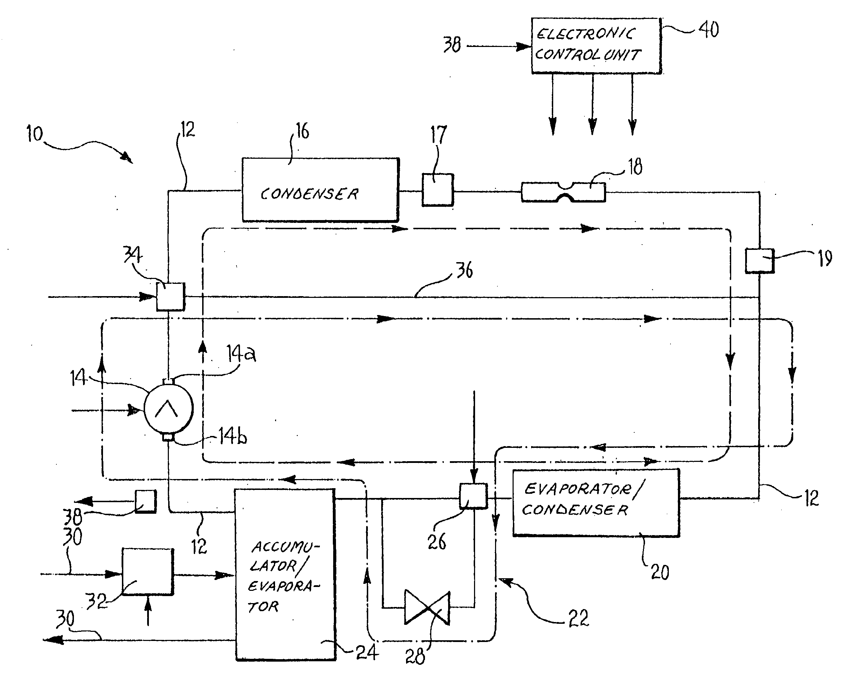

Further characteristics and advantages of the invention will become clear from the following detailed description, given purely by way of non-limiting example, with reference to the appended drawing, which shows the structure of a system according to the invention in the form of a block diagram.

With reference to the drawing, the system according to the invention, generally indicated 10, comprises a closed circuit 12 by means of which a working fluid is subjected to a thermodynamic cycle.

In the circuit 12 there are disposed a compressor 14, a first heat exchanger 16, a first expansion device 18, and a second heat exchanger 20.

The compressor 14 is, for example, a compressor with variable-displacement pistons and has a delivery opening 14a and a suction intake 14b.

The heat exchanger 16 is a condenser and is disposed in the engine compartment of the motor vehicle, whereas the second heat exchanger 20 can act as an evaporator and as a condenser and is disposed in a ventilation duct (not shown) communicating with the passenger compartment of the vehicle.

An on-off solenoid valve 19 is preferably disposed between the expansion device and the heat exchanger 20.

The expansion device 18 is, for example, a tube with a calibrated orifice.

A cartridge filter 17, for example, of the type with silica-gel or zeolites, may advantageously be interposed between the output of the condenser 16 and the expansion device 18. This filter may optionally be incorporated in the condenser 16.

A valve arrangement, generally indicated 22, and a further heat exchanger 24 are interposed between the output of the heat exchanger 20 and the suction intake 14b of the compressor 14.

The valve arrangement 22 comprises a diverting solenoid valve 26 having its input connected to the output of the heat exchanger 20, a first output connected directly to the input of the heat exchanger 24, and a second output connected to the input of the heat exchanger 24 via a second fluid expansion device 28 such as an expansion valve or a tube with a calibrated orifice.

The heat exchanger 24 is of the gas/liquid type and can act as an accumulator for the working fluid in the liquid state, or as an evaporator.

The heat exchanger 24 is connected to the liquid engine-coolant circuit 30 (not shown) of the motor vehicle, by means of a variable-flow solenoid valve 32. This solenoid valve is, for example, a proportional solenoid valve.

A second diverting solenoid valve, indicated 34, is disposed between the output 14a of the compressor 14 and the input of the condenser 16. This solenoid valve has a first output connected to the input of the condenser 16 and a second output connected to an end of a by-pass duct 36. The other end of this by-pass duct is connected between the solenoid valve 19 and the input of the heat exchanger 20.

A temperature sensor 38 is disposed in the circuit 12 between the output of the heat exchanger 24 and the suction intake 14b of the compressor 14 for supplying, to an electronic control unit 40, electrical signals indicative of the temperature of the gaseous working fluid at the intake of the said compressor.

The control unit 40 is also arranged to drive the solenoid valves 19, 26, 32 and 34 in the manners which will be described below.

The control unit 40 is arranged to cause the diverting valves 26, 34 and the solenoid valve 19 to adopt a first operative condition and a second operative condition.

In the first of these conditions, the solenoid valve 19 is open and the working fluid circulates solely in the main circuit 12, that is, starting from the compressor 14, through the condenser 16, the first expansion device 18, the heat exchanger 20 which, in this case, acts as an evaporator, the valve 26 and, from this valve, goes directly to the further heat exchanger 24 and then to the compressor 14 again, without passing through the second expansion device 28. In this condition, the heat exchanger 24 acts as an accumulator for working fluid in the liquid state and the solenoid valve 32 is driven by the control unit 40 so as to bring about controlled superheating of the working fluid, which enters the compressor 14 in the gaseous state, in dependence on its temperature detected by the sensor 38.

In the first operative condition of the above-described system, the working fluid thus flows substantially along the broken line shown in the drawing. In this condition, the system operates as a cooling system in order to cool the air in the passenger compartment. The working fluid in the gaseous state is subjected to an increase in pressure and temperature by the compressor 14 and then reaches the condenser 16 in which it gives up heat to the outside atmosphere, cooling and changing to the liquid state. Then, as the working fluid passes through the expansion device 18, it expands rapidly and cools. As it passes through the heat exchanger 20, the working fluid returns to the gaseous state, absorbing heat from the air-flow which is sent into the passenger compartment of the motor vehicle. At the output of the evaporator, any working fluid in the liquid state is deposited in the exchanger 24 which acts as an accumulator, whilst the working fluid in the gaseous state, suitably superheated, then returns to the compressor 14.

The control unit 40 is arranged to cause the diverting solenoid valves 26, 34 and the solenoid valve 19 to adopt a second operative condition in which the solenoid valve 19 is closed and the working fluid follows the path indicated by the chain line in the drawing. In this mode of operation, the system 10 acts as a heater. In fact, the working fluid in the gaseous state is subjected to an increase in pressure and temperature by the compressor 14 and is sent through the diverting valve 34 and the by-pass duct 36 to the heat exchanger 20 disposed in the ventilation duct communicating with the passenger compartment of the vehicle. In this condition, the heat exchanger 20 acts as a condenser and gives up heat to the air-flow directed to the passenger compartment. The working fluid is then passed through the diverting valve 26 into the second expansion device 28 and returns to the gaseous state, drawing heat from the heat exchanger 24 which now acts as an evaporator. In this condition, the solenoid valve 32 is driven in a manner such as to ensure a predetermined high flow-rate of (hot) coolant liquid to the heat exchanger 24. For example, the solenoid valve 32 may be kept fully open in these conditions.

The system according to the invention enables the above-described two modes of operation to be achieved with a high level of efficiency and with the use of a small number of components.

Naturally, the principle of the invention remaining the same, the forms of embodiment and details of construction may be varied widely with respect to those described and illustrated purely by way of non-limiting example, without thereby departing from the scope of the invention as defined in the appended claims.

In a variant, not shown, the valve arrangement 20 shown in the drawing may be replaced simply by a choking solenoid valve which can selectively adopt a condition in which it is fully open to the flow of working fluid between the heat exchangers 20 and 24 and a condition in which it chokes the cross-section of flow for the fluid, reducing it to a restricted cross-section suitable for bringing about expansion of the fluid.

## Claims

1. A system (10) for cooling and heating the passenger compartment of a vehicle, comprising:
a closed circuit (12) in which a working fluid is subjected to a thermodynamic cycle and which includes a compressor (14) with a delivery opening (14a) connected to a condenser (16), followed by fluid expansion means (18) and then by a heat exchanger (20) which can act as an evaporator and as a condenser and the output of which is connected to the suction intake (14b) of the compressor (14),
a by-pass duct (36) having one end connected between the compressor (14) and the condenser (16) and the other end connected between the expansion means (18) and the input of the heat exchanger (20),
electrically-operated switching valve means (26, 34, 19) which can adopt a first and a second operative condition in which the by-pass duct (36) is excluded from and connected in the circuit (12), respectively, so that, in the first condition, the system (10) operates as a cooling system and the heat exchanger (20) acts as an evaporator and, in the second condition, the system (10) operates as a heating system with a heat pump and the exchanger (20) acts as a condenser,
a further heat exchanger (24) of the gas/liquid type, which is interposed between the heat exchanger (20) and the suction intake of the compressor (14), and which can act, in the first and second operative conditions of the switching valve means (26, 34, 19), respectively, as an accumulator for the working fluid in the liquid state, and as an evaporator,
the said further heat exchanger (24) being connected to the liquid engine-coolant circuit (30) of the motor vehicle by means of a variable-flow solenoid valve (32), and
control means (40) associated with the said solenoid valve (32) being able to modify the flow of the solenoid valve (32) when the said switching valve means (26, 34, 19) are in the first operative condition so as to bring about controlled superheating of the working fluid, which enters the compressor (14) in the gaseous state, in dependence on its detected temperature.

2. A system according to Claim 1, in which the control means (40) can keep the said solenoid valve (32) in a condition in which it ensures a predetermined flow-rate of engine coolant liquid to the said further heat exchanger (24) when the switching valve means (26, 34, 19) are in the second operative condition.

3. A system according to Claim 1 or Claim 2, in which the expansion means (18) comprise a tube with a calibrated orifice (14).

4. A system according to any one of the preceding claims, in which a valve arrangement (22) is interposed between the said heat exchanger (20) and the further said heat exchanger (24) and
in a first condition, can connect the output of the heat exchanger (20) to the input of the further heat exchanger (24) without bringing about expansion of the working fluid, and
in a second condition, can connect the output of the heat exchanger (20) to the input of the further heat exchanger (24), bringing about expansion of the working fluid.

5. A system according to Claim 4, in which the said valve arrangement (22) comprises a diverting valve (26) which can connect the output of the heat exchanger (20) to the input of the further heat exchanger (24) selectively directly, or through second fluid expansion means (28), respectively.

6. A system according to Claim 5, in which the second fluid expansion means comprise a tube with a calibrated orifice.

7. A system according to Claim 4, in which the said valve arrangement (22) comprises a choking solenoid valve which is interposed between the output of the said heat exchanger (20) and the input of the further heat exchanger (24) and which can permit a flow of working fluid between them selectively through a full flow cross-section, or through a restricted flow cross-section suitable for bringing about expansion of the working fluid, respectively.

## Patentansprüche

1. System (10) zum Kühlen und Heizen des Fahrgastraums eines Fahrzeugs, umfassend:
einen geschlossenen Kreislauf (12), in dem ein Treibmittel einem thermodynamischen Kreisprozess unterzogen wird und der einen Kompressor (14) mit einer mit einem Kondensator (16) verbundenen Zufuhröffnung (14a) umfasst, gefolgt von Fluidexpansionsmitteln (18) und dann von einem Wärmetauscher (20), der als Verdampfer und Kondensator wirken kann und dessen Ausgang mit dem Saugeinlass (14b) des Kompressors (14) verbunden ist,
ein Umgehungsrohr (36), bei dem das eine Ende zwischen dem Kompressor (14) und dem Kondensator (16) angeschlossen ist und das andere Ende zwischen den Expansionsmitteln (18) und dem Eingang des Wärmetauschers (20) angeschlossen ist,
elektrisch betriebene Schaltventilmittel (26, 34, 19), die einen ersten und einen zweiten Betriebszustand annehmen können, in denen das Umgehungsrohr (36) vom Kreislauf (12) ausgeschlossen bzw. mit diesem verbunden ist, so dass das System (10) im ersten Zustand als Kühlsystem arbeitet und der Wärmetauscher (20) als Verdampfer wirkt und das System (10) im zweiten Zustand als Heizsystem mit Wärmepumpe arbeitet und der Austauscher (20) als Kondensator wirkt,
einen weiteren Wärmetauscher (24) vom Gas/Flüssigkeitstyp, der zwischen dem Wärmetauscher (20) und dem Saugeinlass des Kompressors (14) eingeschaltet ist und im ersten bzw. im zweiten Betriebszustand der Schaltventilmittel (26, 34, 19) als Akkumulator für das Treibmittel im flüssigen Zustand und als Verdampfer wirken kann,
wobei der weitere Wärmetauscher (24) mittels eines Magnetventils mit variabler Strömung (32) am Motorkühlflüssigkeitskreislauf (30) des Kraftfahrzeugs angeschlossen ist, und
Steuermittel (40), die zu diesem Magnetventil (32) gehören, die Strömung des Magnetventils (32) ändern können, wenn sich die Schaltventilmittel (26, 34, 19) im ersten Betriebszustand befinden, um eine kontrollierte Überhitzung des Treibmittels zu bewirken, das im gasförmigen Zustand in den Kompressor (14) tritt, und zwar abhängig von seiner ermittelten Temperatur.

2. System gemäß Anspruch 1, wobei die Steuermittel (40) das Magnetventil (32) in einem Zustand halten können, in dem dieses eine vorbestimmte Durchflussmenge von Motorkühlflüssigkeit zum weiteren Wärmetauscher (24) gewährleistet, wenn sich die Schaltventilmittel (26, 34, 19) im zweiten Betriebszustand befinden.

3. System gemäß Anspruch 1 oder Anspruch 2, wobei die Expansionsmittel (18) ein Rohr mit einer kalibrierten Öffnung (14) umfassen.

4. System gemäß einem der vorhergehenden Ansprüche, wobei eine Ventilanordnung (22) zwischen dem Wärmetauscher (20) und dem weiteren Wärmetauscher (24) eingeschaltet ist und
in einem ersten Zustand den Ausgang des Wärmetauschers (20) mit dem Eingang des weiteren Wärmetauschers (24) verbinden kann, ohne eine Expansion des Treibmittels zu bewirken, und
in einem zweiten Zustand den Ausgang des Wärmetauschers (20) mit dem Eingang des weiteren Wärmetauschers (24) verbinden kann und dabei eine Expansion des Treibmittels bewirkt.

5. System gemäß Anspruch 4, wobei die Ventilanordnung (22) ein Umleitungsventil (26) umfasst, das den Ausgang des Wärmetauschers (20) direkt in selektiver Weise bzw. durch zweite Fluidexpansionsmittel (28) mit dem Eingang des weiteren Wärmetauschers (24) verbinden kann.

6. System gemäß Anspruch 5, wobei die zweiten Fluidexpansionsmittel ein Rohr mit einer kalibrierten Öffnung umfassen.

7. System gemäß Anspruch 4, wobei die Ventilanordnung (22) ein Drosselmagnetventil umfasst, das zwischen dem Ausgang des Wärmetauschers (20) und dem Eingang des weiteren Wärmetauschers (24) eingeschaltet ist und zwischen diesen eine Treibmittelströmung in selektiver Weise durch einen vollständigen Strömungsquerschnitt bzw. durch einen eingeschränkten Strömungsquerschnitt, der zum Bewirken einer Expansion des Treibmittels geeignet ist, ermöglichen kann.

## Revendications

1. Système (10) permettant de refroidir et de chauffer le compartiment passager d'un véhicule, comprenant :
un circuit fermé (12) dans lequel un fluide de travail est soumis à un cycle thermodynamique et qui comprend un compresseur (14) avec une ouverture d'alimentation (14a) reliée à un condensateur (16), suivie de moyens de dilatation du fluide (18) puis par un échangeur de chaleur (20) qui peut servir d'évaporateur et de condensateur, et dont la sortie est reliée à l'entrée d'aspiration (14b) du compresseur (14),
une conduite de dérivation (36) dont une extrémité est reliée entre le compresseur (14) et le condensateur (16) et dont l'autre extrémité est reliée entre les moyens de dilatation (18) et l'entrée de l'échangeur de chaleur (20),
un moyen à soupape de commutation actionnée électriquement (26, 34, 19) qui peut adopter un premier et un second état opérationnel dans lesquels la conduite de dérivation (36) est respectivement exclue du circuit (12) et connectée dans celui-ci, de façon à ce que, dans le premier état, le système (10) agisse comme un système de refroidissement et l'échangeur de chaleur (20) agisse comme un évaporateur et de façon à ce que, dans le second état, le système (10) agisse comme un système de chauffage avec une pompe à chaleur et l'échangeur (20) agisse comme un condensateur,
un autre échangeur de chaleur (24) du type gaz/liquide, qui est interposé entre l'échangeur de chaleur (20) et l'entrée d'aspiration du compresseur (14), et qui peut agir, dans le premier et le second états opérationnels des moyens à soupape de commutation (26, 34, 19) respectivement, comme un accumulateur pour le fluide de travail dans l'état liquide et comme un évaporateur,
ledit autre échangeur de chaleur (24) étant relié au circuit de liquide de refroidissement du moteur (30) du véhicule à moteur à l'aide d'une soupape à solénoïde à flux variable (32), et
un moyen de contrôle (40), associé à ladite soupape à solénoïde (32), capable de modifier le flux de la soupape à solénoïde (32) lorsque lesdits moyens à soupape de commutation (26, 34, 19) sont dans le premier état opérationnel de façon à obtenir un superchauffage contrôlé du fluide de travail, qui entre dans le compresseur (14) à l'état gazeux, en fonction de sa température détectée.

2. Système selon la revendication 1, dans lequel le moyen de contrôle (40) permet de maintenir ladite soupape à solénoïde (32) dans un état dans lequel elle garantit un débit prédéterminé de liquide de refroidissement du moteur vers ledit autre échangeur de chaleur (24) lorsque les moyens à soupape de commutation (26, 34, 19) sont dans le second état opérationnel.

3. Système selon la revendication 1 ou la revendication 2, dans lequel les moyens de dilatation (18) comprennent un tube avec un orifice calibré (14).

4. Système selon l'une des revendications précédentes, dans lequel un dispositif à soupape (22) est interposé entre ledit échangeur de chaleur (20) et ledit autre échangeur de chaleur (24) et
dans un premier état, il permet de relier la sortie de l'échangeur de chaleur (20) à l'entrée de l'autre échangeur de chaleur (24) sans provoquer la dilatation du fluide de travail, et
dans un second état, il permet de relier la sortie de l'échangeur de chaleur (20) à l'entrée de l'autre échangeur de chaleur (24), ce qui provoque la dilation du fluide de travail.

5. Système selon la revendication 4, dans lequel ledit dispositif à soupape (22) comprend une soupape papillon (26) qui permet de relier la sortie de l'échangeur de chaleur (20) à l'entrée de l'autre échangeur de chaleur (24) de manière sélective directement ou par l'intermédiaire du second moyen de dilatation du fluide (28), respectivement.

6. Système selon la revendication 5, dans lequel les seconds moyens de dilatation du fluide comprennent un tube avec un orifice calibré.

7. Système selon la revendication 4, dans lequel ledit dispositif à soupape (22) comprend une soupape à solénoïde de calage qui est interposée entre la sortie dudit échangeur de chaleur (20) et l'entrée de l'autre échangeur de chaleur (24) et qui permet un flux de fluide de travail entre eux de manière sélective par l'intermédiaire d'une section transversale à flux complet ou par l'intermédiaire d'une section transversale à flux restreint appropriée pour provoquer la dilatation du fluide de travail, respectivement.
